(19) Europäisches Patentamt
European Patent Office
Office européen des brevets

(11) Veröffentlichungsnummer: **0 102 573**
**B1**

(12) # EUROPÄISCHE PATENTSCHRIFT

(45) Veröffentlichungstag der Patentschrift: **26.02.86**

(51) Int. Cl.⁴: **C 08 G 63/64**, C 08 L 69/00

(21) Anmeldenummer: **83108192.2**

(22) Anmeldetag: **19.08.83**

(54) **Polycarbonate mit konjugierte Doppelbindungen enthaltenden Endgruppen, gegebenenfalls im Gemisch mit bekannten aromatischen Polycarbonaten, ihre Herstellung und ihre Verwendung.**

(30) Priorität: **31.08.82 DE 3232391**

(43) Veröffentlichungstag der Anmeldung: **14.03.84 Patentblatt 84/11**

(45) Bekanntmachung des Hinweises auf die Patenterteilung: **26.02.86 Patentblatt 86/9**

(84) Benannte Vertragsstaaten: **DE FR GB IT**

(56) Entgegenhaltungen:
**EP-A-0 001 579**
**EP-A-0 006 579**
**EP-A-0 009 747**
**EP-A-0 010 164**

(73) Patentinhaber: **BAYER AG, Konzernverwaltung RP Patentabteilung, D-5090 Leverkusen 1 Bayerwerk (DE)**

(72) Erfinder: **Stix, Wolfgang, Dr., Dörperhofstrasse 15, D-4150 Krefeld (DE)**
Erfinder: **Bottenbruch, Ludwig, Dr., Wöhlerstrasse 5, D-4150 Krefeld (DE)**
Erfinder: **Neuray, Dieter, Dr., 140 Fairview Drive, New Martinsville West Virginia 26155 (US)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

EP 0 102 573 B1

**Beschreibung**

Gegenstand der vorliegenden Erfindung ist ein Verfahren zur Herstellung von aromatischen Polycarbonaten mit konjugierte Doppelbindungen enthaltenden Endgruppen und mit mittleren Molekulargewichten Mw (Gewichtsmittel, ermittelt durch Lichtstreuung) zwischen 5000 und 100 000, gegebenenfalls im Gemisch mit bekannten aromatischen Polycarbonaten mit Mw zwischen 5 000 und 100 000, aus Diphenolen, Phosgen, 1 bis 20 Mol-%, bezogen auf Mole Diphenole, Kettenabbrecher und gegebenenfalls Verzweigern nach den bekannten Polycarbonatherstellungsmethoden des Phasengrenzflächenverfahrens oder des Verfahrens in homogener Lösung, das dadurch gekennzeichnet ist, daß man Kettenabbrecher der Formel (I)

X-A- $(CH_2)_n$-CH=CH-CH=CH-R (I)

gegebenenfalls in Kombination mit maximal gleichen Molmengen an anderen, bekannten Kettenabbrechern verwendet.

In den Kettenabbrechern der Formel (I) ist R ein aromatischer Rest mit 6 bis 20 C-Atomen, insbesondere Phenyl, oder ein $C_1$-$C_8$-Alkyl, das linear oder verzweigt sein kan, insbesondere Methyl. Die Variable 'n" ist 'o" oder eine ganze Zahl zwischen 1 und 7.

In den Kettenabbrechern der Formel (I) ist X-A- entweder X-, also -A- eine Einfachbindung, oder ein Rest

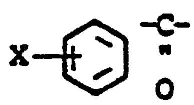

oder ein Rest

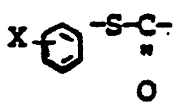

und X- eine funktionelle Gruppe, die bei der Polycarbonatherstellung nach dem Zweiphasengrenzflächenverfahren oder nach dem Verfahren in homogener Phase (Pyridinverfahren) als reaktiver Teil der Kettenabbrecher der Formel (I) fungiert.

Beispielsweise kann

X- 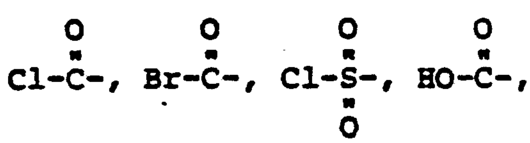

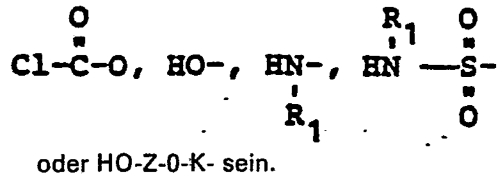

oder HO-Z-0-K- sein.

Vorzugsweise ist X-

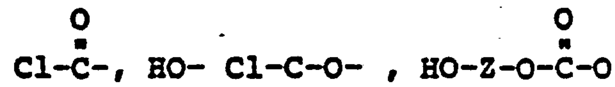

oder

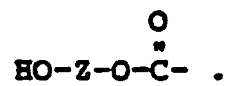

$R_1$ ist ein aromatischer Rest mit vorzugsweise 8 bis 20 C-Atomen, insbesondere Phenyl, oder ein aliphatischer Rest mit 1 bis 8 C-Atomen, insbesondere Methyl; -O-Z-Oist ein Diphenolatrest mit vorzugsweise 6 bis 30 C-Atomen;

-K- ist 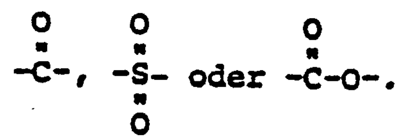

Bekannte, bei dem erfindungsgemäßen Verfahren mitzuverwendende andere Kettenabbrecher sind beispielsweise Phenole, Carbonsäurehalogenide, Sulfonsäurechloride oder Chlorkohlensäureester.

Beispiele für die bekannten, mitzuverwendenden Kettenabbrecher sind Phenol, p-tert.-Butylphenol, 2,6-Di-methylphenol oder p-Isooctylphenol.

Beispiele für die Kettenabbrecher der Formel (I) sind Sorbinsäurechlorid, Sorbinsäure, Sorbinalkohol ($CH_3$-CH=CH-CH=CH-$CH_2$OH), der Chlorkohlensäureester des Sorbinalkohols,

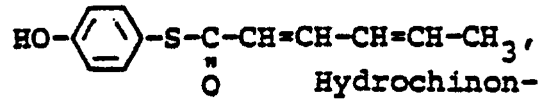

Hydrochinon-monosorbinsäureester oder 2, 2-Bis- (4-hydroxyphenyl) -propan-monosorb insäureester.

Die Diphenolmonoester, wie Hydrochinonmonosorbinsäureester oder 2, 2-Bis-(4-hydroxyphenyl) -propanmonosorbinsäureester, können z.B. dadurch hergestellt werden, daß man das entsprechende Diphenol und Sorbinsäurechlorid im Molverhältnis 1: 1 bis 5: 1 in einem organischen Lösungsmittel mit einem Siedepunkt von mindestens 80 ° C löst, die Lösung auf mindestens 80° C erwärmt und die entstehende HCl im Stickstoff strom austreibt.

Gegenstand der vorliegenden Erfindung sind außerdem die nach dem erfindungsgemäßen Verfahren erhältlichen aromatischen Polycarbonate mit konjugierte Doppelbindungen enthaltenden Endgruppen der Formel (Ia)

-A- $(CH_2)_n$-CH=CH-CH=CH-R (Ia),

worin R, 'n" und -A- die für die Formel (I) genannte Bedeutung haben, gegebenenfalls im Gemisch mit bekannten aromatischen Polycarbonaten, mit Mw zwischen 5 000 und 100 000, die aus dem Kettenabbruch mit den anderen, bekannten Kettenabbrechern resultieren.

Nach dem erfindungsgemäßen Verfahren erhältliche aromatische Polycarbonate mit mittleren Molekulargewichten Mw (Gewichtsmittel ermittelt durch Lichtstreuung) zwischen 5000 und 1 00 000 sind vorzugsweise solche der Formel (I)

(II)

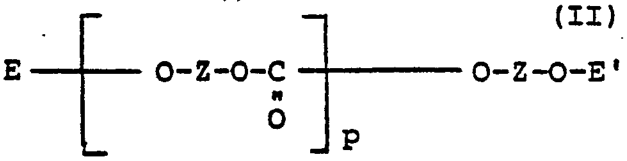

worin -0-Z-0- ein Diphenolatrest mit vorzugsweise 6 bis 30 C-Atomen ist,

E und E' gleich oder verschieden sind und wobei mindestens einer der Reste E oder E' einem Rest der Formel (Ib) -Y-A- $(CH_2)_n$-CH=CH-CH=CH-R entspricht, worin R, 'n" und -A- die für Formel (I) genannte Bedeutung haben und -Ydas Bindeglied ist, das aus der Reaktion der Kettenabbrecher der Formel (I), gegebenenfalls unter Einbeziehung von Phosgen resultiert, und wobei die übrigen Endgruppen E und E' aus der Reaktion mit den anderen, bekannten Kettenabbrechern, gegebenenfalls unter Einbeziehung von Phosgen resultieren und wobei 'p" der Polymerisationsgrad ist, der aus den Molekulargewichten Mw von 5 000 bis 100 000 resultiert.

Beispiele für die Bindeglieder -Y- sind

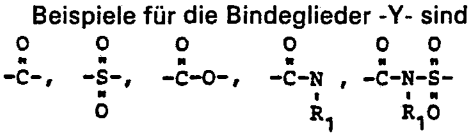

oder 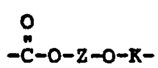

wobei $R_1$, Z und K die oben für die X-Reste genannte Bedeutung hat.

Beispiele für bevorzugte Bindeglieder -Y- sind

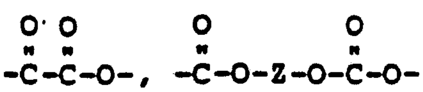

und 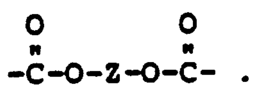 .

Die erfindungsgemäßen Polycarbonate besitzen aufgrund der Endgruppen die Fähigkeit, beim längeren Erhitzen, also bei einer Wärmebehandlung, ihr Molekulargewicht zu erhöhen.

Thermoplastische, aromatische Polvcarbonate mit ungesättigten Endgruppen sind bekannt (siehe Deutsche Offenlegungsschriften Nr. 2 746 139 (Le A 18 392), 2 829 256 (Le A 18 847), 2 843 154 (Le A 19 147) und 2 842 004 (Le A 19 148)). Die Doppelbindungen dieser Polycarbonate können für bestimmte Reaktionen (Pfropfung, UV-Lichtvernetzung) genutzt werden.

Ein gezielter Molekulargewichtsaufbau beim Erwärmen erfolgt jedoch bei diesen Polycarbonaten nicht, vielmehr sind diese Produkte bei Temperaturen von 280 °C bis 300 °C noch stabil.

Für die Herstellung der erfindungsgemäßen Polycarbonate geeignete Diphenole der Formel (III)

HO-Z-OH (III)

mit vorzugsweise 6 bis 30 C-Atomen sind sowohl einkernige, als auch mehrkernige Diphenole, die Heteroatome enthalten können und unter den Bedingungen der Polycarbonatherstellung und deren thermischer Behandlung inerte Substituenten haben können.

Beispielsweise seien Hydrochinon, Resorcin, Dihydroxydiphenyl, Bis - (hydroxyphenyl) -alkane, Bis- (hydroxyphenyl) -cycloalkane, Bis- (hydroxyphenyl) -sulfide, -ether, -ketone, -sulfoxide, -sulfone und α,α-Bis- (hydroxy-Phenyl) -diisopropylbenzole sowie deren kernalkylierte und kernhalogenierte Verbindungen genannt.

Geeignete Diphenole sind beispielsweise in den US-Patenten 3 028 365, 2 999 835, 3 062 781 und 3 148 172, in den Deutschen Offenlegungsschriften 1 570 703 und 2 063 050 sowie in der Monographie 'H. Schnell, Chemistry and Physics of Polycarbonates, Interscience Publishers, New York, 1964" beschrieben.

Bevorzugte Diphenole sind

4,4' -Dihydroxydiphenyl

2,2-Bis - (4 -hydroxyphenyl) -propan

2,4 -Bis- (4-hydroxyphenyl) -2-methylbutan

1,1 -Bis - (4-hydroxyphenyl) -cyclohexan

α,α-Bis - (4 -hydroxyphenyl) -p-diisopropylbenzol

2,2-Bis - (3-methyl-4 -hydroxyphenyl) -propan

2,2-Bis- (3-chlor-4-hydroxyphenyl) -propan

Bis- (3, 5-dimethyl-4-hydroxyphenyl) -methan

2, 2-Bis- (3, 5-dimethyl-4-hydroxyphenyl) -propan

Bis- (3, 5-dimethyl-4-hydroxyphenyl) -sulfon

2,4 -Bis- (3, 5-dimethyl-4-hydroxyphenyl) -2-methylbutan

1,1 -Bis - (3, 5-dimethyl -4 -hydroxyphenyl) -cyclohexan

α,α'-Bis- (3,5-dimethyl-4-hydroxyphenyl) -p-diisopropylbenzol

2,2-Bis- (3,5-dichlor-4-hydroxyphenyl) -propan

2,2-Bis- (3, 5-dibrom-4-hydroxyphenyl) -propan.

Besonders bevorzugte Diphenole sind z.B:

2,2-Bis- (4 -hydroxyphenyl) -propan

2,2-Bis- (3, 5-dimethyl-4-hydroxyphenyl) -propan

2,2-Bis- (3, 5-dichlor-4-hydroxyphenyl) -propan

2,2-Bis- (3, 5-dibrom-4-hydroxyphenyl) -propan

1,1 -Bis - (4 -hydroxyphenyl) -cyclohexan.

Es können auch beliebige Mischungen der vorgenannten Diphenole verwendet werden.

Neben den genannten monomeren Diphenolen können zur Darstellung von Blockcopolycarbonaten mit den erfindungsgemäßen Endgruppen auch Oligomere oder

Polymere mitverwendet werden, die zwei unter den Bedingungen der Polycarbonatsynthese zur Aufbaureaktion befänigte Endgruppen tragen. Solche Endgruppen sind z.B. phenolische OH-Gruppen, Chlorkohlensäureestergruppen und Carbonsäurechloridgruppen. Vorgefertigte oligomere oder polymere Blöcke, die die genannten reaktiven Gruppen infolge der Art ihrer Herstellung bereits tragen oder bei denen man solche Gruppen durch eine geeignete Nachbehandlung erzeugen kann, sind z.B. Polysiloxane, Polycondensate auf der Basis von aliphatischen Diolen und gesättigten aliphatischen oder aromatischen Dicarbonsäuren, aromatische Polyether, aromatische Polyethersulfone, aliphatische Polyether und gesättigte aliphatische Polyester auf der Basis von Dimerfettsäure.

Derartige cokondensierbare, bifunktionelle Oligomere oder Polymere können Molekulargewichte Mn (Zahlenmittel bestimmt durch Dampfdruckosmose) zwischen 50 und 5000 haben und werden in solchen Mengen eingesetzt, daß die resultierenden erf indungsgemäßen, ungesättigte Endgruppen enthaltenden Polycarbonate zwischen 0 und 80 Gew.-% enthalten.

Gegenstand der vorliegenden Erfindung ist somit auch die Modifizierung des erfindungsgemäßen Herstellungsverfahrens, das dadurch gekennzeichnet ist, daß man unter den Polycarbonatherstellungsbedingungen cokondensierbare bifunktionelle Oligomere oder Polymere mit Molekulargewichten Mn (Zahlenmittel) zwischen 500 und 5000 in Mengen von 0 bis 450 Gew.-%, bezogen auf Gewichtsmenge an einge setzten monomeren Diphenolen, mitverwendet.

Gegenstand der vorliegenden Erfindung sind somit auch die nach diesem modif izierten, erfindungsgemäßen Verfahren erhältlichen aromatischen segmentierten Polycarbonate mit konjugierte Doppelbindungen enthaltenden Endgruppen der Formel (Ia), gegebenenfalls im Gemisch mit bekannten aromatischen segmentierten Polycarbonaten, die aus dem Kettenabbruch mit den anderen, bekannten Kettenabbrechern resultieren.

Zwecks Verbesserung des Fließverhaltens können auch geringe Mengen, vorzugsweise Mengen zwischen 0,05 und 2,0 Mol-% (be zogen auf Mole an eingesetzten Diphenolen), an tri- oder mehr als trifunktionellen Verbindungen, insbesondere solchen mit drei oder mehr als drei phenolischen Hydroxylgruppen in bekannter Weise mitverwendet werden. Einige der verwendbaren Verbindungen mit dre i oder mehr als drei phenolischen Hydroxylgruppen sind beispielsweise 1.3. 5-Tri- (4-hydroxyphenyl) -benzol, 1. 1. 1 -Tri- (4-hydroxyphenyl) -ethan, 2.6-Bis- (2-hydroxy-5' -methyl-ben zyl) -4-methylphenol, 2- (4-Hydroxyphenyl)-2- (2.4-dihydroxyphenyl) -propan, Hexa- (4- (4-hydroxypheny lisopropyl) -phenyl) -ortho-terephthal säuree ster, Tetra-(4-hydroxyphenyl) -methan und 1.4-Bis- ((4'.4''- dihydroxytriphenyl) -methyl) -benzol. Einige der sonstigen dreifunktionellen Verbindungen sind 2. 4-Dihydroxyben zoesäure, Trimesinsäure, Cyanurchlorid und 3.3-Bis- (4-hydroxy-3-methyl-phenyl) -2-oxo-2. 3-dihydro indol.

Die Herstellung der erfindungsgemäßen Polvcarbonate bzw. Polycarbonatgemische kann im wesentlichen nach folgenden zwei bekannten Methoden (vgl. H. Schnell, 'Chemistry and Physics of Polycarbonates", Polymer Reviews, Vol. IX, Seite 27 ff., Interscience Publ. 1964) erfolgen:

1. Nach dem Lösungsverfahren ih disperser Phase (sogenanntes Zweiphasengrenzflächen-Verfahren):

Hierbei werden die einzusetztenden Diphenole in wäßriger alkalischer Phase gelöst. Dazu werden die zur Herstellung der erfindungsgemäßen Polycarbonate erforderlichen Kettenabbrecher in Mengen von 1,0-20,0 Mol-%, bezogen auf Mole Diphenol, in einem organischen Lösungsmittel gelöst oder in Substanz, zugegeben. Dann wird in Gegenwart einer inerten, vorzugsweise Polycarbonatlösenden, organischen Phase mit Phosgen umgesetzt. Die Reaktionstemperatur liegt zwischen 0 °C bis 40° C.

Die Zugabe der erforderlichen Kettenabbrecher in Art und Menge wie oben angegeben, kann auch während der Phosgenierung erfolgen.

Geeignete organische Lösungsmittel für die Kettenabbrecher sind beispielsweise Methylenchlorid, Chlorbenzol, Mischungen aus Methylenchlorid und Chlorbenzol, Aceton, Acetonitril, Toluol.

Die Reaktion kann durch Katalysatoren wie Tributylamin oder Triethylam in begünstigt werden. Um den Einbau des Kettenabbrechers zu begünstigen, können auch Oniumsalze, wie etwa Tetraalkylammoniumhalogenide als Phasentransferkatalysatoren mitverwendet werden.

Werden Verzweiger bzw. cokondensierbare bifunktionelle Oligomere oder Polymere mitverwendet, so kann deren Zugabe vor der umsetzung mit Phosgen oder während der Phosgenierung erfolgen.

Neben oder anstelle der Diphenole können auch deren Chlorkohlensäureester eingesetzt werden.

2. Nach dem Lösungsverfahren in homogener Phase (auch Pyridin-Verfahren genannt):

Hierbei werden die Diphenole ih organischen Basen wie Pyridin gelöst, gegebenenfalls unter Zusatz weiterer organischer Lösungsmittel; dann werden, wie unter 1. beschrieben, die zur Herstellung der erfin-dungsgemäßen Polycarbonate erforderlichen Kettenabbrecher in Mengen von 1, 0 - 20,0 Mol-%, bezogen auf Mol Diphenol, bei Raumtemperatur zugegeben.

Dann wird mit Phosgen umgesetzt. Die Reaktionstemperatur liegt zwischen 0 °C und 40 °C. Geeignete organische Basen außer Pyridin sind z.B. Triethylamin, Tributylamin; geeignete

Lösungsmittel sind beispielsweise Methylenchlorid, Chlorbenzol, Toluol oder Gemische aus Methylenchlorid und Chlorbenzol oder Toluol.

Die Isolierung der erf indungsgemäßen Polycarbonate erfolgt bei den Verfahrensvarianten 1 und 2 in bekannter Weise. Um bei der Aufarbeitung nicht schon einen teilweisen Aufbau des Molekulargewichtes herbeizuführen, sollten Temperaturen größer 100 °C nach Möglichkeit nicht angewendet werden. Geeignete Aufarbeitungsverfahren sind insbesondere das Ausfällen, die Sprühtrocknung und das Verdampfen des Lösungsmittels im Vacuum.

Bei der Mitverwendung von Verzweigern bzw. cokondensierbaren bifunktionellen Oligomeren wird wie unter 1. beschrieben verfahren.

Neben den Diphenolen können auch bis zu 50 Mol-%, bezogen auf die eingesetzten Diphenole, von deren Bischlorkohlensäureestern eingesetzt werden.

Die erfindungsgemäßen Polycarbonate können durch Erwärmen auf Temperaturen zwischen 150 °C bis 400 °C, vorzugsweise auf Temperaturen zwischen 200 °C bis 350 °C, in Polycarbonate mit höherem Molekulargewicht überführt werden. Verzweigte Polycarbonate können dabei vernetzte, unlösliche Produkte ergeben. Die Dauer der Wärmebehandlung richtet sich nach der eingestellten Maximaltemperatur und dem gewünchten Molekulargewichtsaufbau. Die Wärmebehandlung wird mit Vorteil bei der Verarbeitung zu Formkörpern ih Extrudern, Pressen oder Spritzgußmaschinen durchgeführt. Sie kann auch durch Aufschmelzen in Knetern oder Rührkesseln erfolgen. Das Ausmaß der Molekulargewichtserhöhung ist z.B. durch einen Vergleich der Lösungsviskosität der Probe vor und nach der Wärmebehandlung feststellbar.

Die erfindungsgemäßen Polycarbonate bieten den Vorteil, daß man aus niedrigviskosen, leicht fließenden Polycarbonaten Formkörper aus sehr hochmolekularem Polycarbonat herstellen kann. Solche Formkörper zeigen im allgemeinen bessere mechanische und chemische Eigenschaften als solche aus niedermolekularem Material.

Die erfindungsgemäßen Polycarbonate können vor oder bei deren Verarbeitung auch noch mit bekannten, aromatischen thermoplastischen Polycarbonaten mit Mw (Gewichtsmittelmolekulargewicht, gemessen nach der Methode der Lichtstreuung) von 10 000 bis 200 000, in Mengen von 5 bis 95 Gew.-%, bezogen auf die Gewichtsmenge an erfindungsgemäßen, konjugierte Doppelbindungen enthaltende Endgruppen besitzenden Polycarbonaten abgemischt werden.

Derartige Gemische können zum Teil auch dadurch erhalten werden, daß man bei der erfindungsgemäßen Herstellung der Polycarbonate mit konjugierte Doppelbindungen enthaltenden Endgruppen das Mol-Verhältnis von erfindungs-gemäßem Kettenabbrecher der Formel (I) zu bekanntem Kettenabbrecher zwischen 0, 05 und 0,90 wählt.

Gegenstand der vorliegenden Erfindung sind somit auch Gemische bestehend aus 5 bis 95 Gew.-% an Polycarbonat der Formel II und 95 bis 5 Gew.-% an bekannten, aromatischen, thermoplastischen Polycarbonaten mit Mw (Gewichtsmittelmolekulargewicht) von 10 000 bis 200 000.

In dem nachfolgenden Beispielen ist $\eta$ rel. gemessen in $CH_2Cl_2$ bei 25°C und einer Konzentration von 0,5 g pro 100 ml $CH_2Cl_2$.

**Beispiel 1**

Aus 1,571 kg 2,2-Bis- (4-hydroxyphenyl) -propan (Bisphenol A) (6,88 Mol), 1,223 kg einer 45%igen wäßrigen Natriumhydroxidlösung und 1 1 1 destilliertem Wasser wird eine Lösung hergestellt. Nach Zugabe von 27 Litern Methylenchlorid wird innerhalb von 2-3 Min. bei 20-25°C eine Lösung bestehend aus 2 1 Methylenchlorid, 62,6 kg Sorbinsäurechlorid (0,48 Mol), 396 g Bisphenol A-bischlorkohlensäureester (1, 1 2 Mol) und 25,8 g Tetrabutylammoniumbromid (0,08 Mol) zulaufen gelassen. Anschließend werden bei 20 °C-25°C unter Rühren 1, 155 kg (1 1,68 Mol) Phosgen eingeleitet. Der pH-Wert wird während der Phosgenierung durch die Zugabe von weiteren 2,29 kg 45%iger wäßriger Natriumhydroxidlösung auf pH 12 gehalten. Nach beendeter Phosgeneinleitung wird der pH-Wert durch die Zugabe von weiteren 0,07 kg 45%iger wäßriger Natriumhydroxidlösung auf pH 13 ängehoben, 7 g Triethylamin zugefügt und weitere 30 Min. gerührt. Die obere wäßrige Phase wird abgetrennt, die organische Phase angesäuert und elektrolytfrei gewaschen. Die Methylenchloridlösung wird eingeengt, das erhaltene Produkt zerkleinert und 24 h bei 80 °C im Vakuumtrockenschrank getrocknet. Die relative Lösungsviskosität beträgt 1.159.

Jeweils 2 g des erhaltenen Polycarbonates werden in 20 ml Methylenchlorid gelöst, die Lösungen jeweils in einem 1 00 ml Rundkolben gegeben und das Lösungsmittel bei 30-40 °C im Wasserstrahlvakuum am Rotavapor abgezogen.

Man erhält auf diese Weise Polycarbonatf ilme auf der Innenseite der Kolben. Die Kolben werden nun jeweils 5 Min. in Salzbäder mit unterschiedlicher Temperatur getaucht und auf diese Weise der Molekulargewichtsaufbau bei den angewendeten Temperaturen bestimmt:

$\eta$ rel (Ausgangsprobe) = 1, 1 59
Temperung: 5 Min. bei 270 °C $\eta$ rel (nach Temperung)
= 1,169
5 Min. bei 290°C $\eta$ rel (nach Temperung)
= 1,190
5 Min. bei 310°C $\eta$ rel (nach Temperung)
= 1,205.

**Beispiel 2**

Aus 2, 192 kg 2,2-Bis- (4-hydroxyphenyl) -propan (Bisphenol A) (9,6 Mol), 1,787 kg einer 45%igen wäßrigen Natriumhydroxidlösung und 14 1 destilliertem Wasser wird eine Lösung hergestellt. Nach Zugabe von 34 1 Methylenchlorid werden bei 20 - 25°C 1, 580 kg Phosgen (16 Mol) eingeleitet und nach 5 Minuten des Beginns der Phosgeneinleitung eine Lösung bestehend aus 32,2 g (0, 1 Mol) Tetrabutylammoniumbromid, 141 2 g (0,4 Mol) Bisphenol-A-bischlorkohlensäureester, 52,5 g (0,4 Mol) Sorbinsäurechlorid und 2 1 Methylenchlorid parallel zur Phosgeneinleitung zugetropft, so daß die Lösung 5 bis 10 Minuten vor Beendigung der Phosgeneinleitung zugetropft ist. Der pH-Wert wird während der Phosgenierung durch Zugabe von 2,365 kg 45 %-iger wäßriger Natriumhydroxidlösung auf pH 12 - 13 gehalten.

Nach Beendigung der Phosgenierung werden 275 ml 4 %-ige N-Ethylpiperidihlösung zugegeben und weitere 45 Minuten gerührt. Die obere wäßrige Phase wird abgetrennt, die organischen Phase angesäuert und elektrolytfrei gewaschen. Das Polycarbonat wurde aus der organischen Phase in der doppelten Menge Aceton gef ällt und 12 h bei 130 °C im Vakuumtrockenschrank getrocknet. Die realtive Lösungsvikosität beträgt 1,256.

Aus dem erhaltenen Material wurden transparente Filme gepreßt. Die Bedingungen beim Pressen und die nach dem Pressen an den Filmen gemessene Lösungsvikosität ist ih der folgenden Tabelle 1 aufgeführt.

**Tabelle 1**

| :essdruc:: /bar/ | Presstemperatur /°C/ | Pressdauer /Min/ | η rel am gepreßten Film |
|---|---|---|---|
| 80 | 280 | 2 | 1,284 |
| " | " | 5 | 1,305 |
| " | 290 | 2 | 1,273 |
| " | " | 5 | 1,308 |
| " | " | 10 | 1,350 |
| " | " | 15 | 1,377 |
| " | 300 | 2 | 1,289 |
| " | " | 5 | 1,312 |
| " | 310 | 2 | 1,291 |
| " | " | 5 | 1,313 |

**Beispiel 3**

Aus 45, 7 g 2, 2-Bis- (4-hydroxyphenyl) -propan (Bisphenol A) (0,2 Mol), 16 g Natriumhydroxid (0 4 Mol) und 680 ml destilliertes Wasser wird eine Lösung hergestellt. Nach Zugabe von 2,36 g p-Hydroxithiophenylsorbinsäureester (0, 01 Mol) gelöst in 370 ml Methylenchlorid werden bei 20 °C - 25°C unter Rühren 32 g (0,32 Mol) Phosgen eingeleitet. Der pH-Wert wird während der Phosgenierung durch Zugabe von 20 ml 45%-iger wäßriger Natriumhydroxidlösung auf pH 12 gehalten. Nach beendeter Phosgenierung wird der pH-Wert durch Zugabe von weiteren 20 ml 45%iger wäßriger Natriumhydroxidlösung auf pH 13 - 14 angehoben, 4 ml 4%ige wäßrige Triethylaminlösung zugefügt und weitere 45 Minuten gerührt. Die obere wäßrige Phase wird abgetrennt, die organische Phase angesäuert und elektrolytfrei gewaschen.

Die Methylenchloridlösung wird eingeengt und das Produkt bei 80 °C 12 h im Vakuumtrockenschrank getrocknet.

Die relative Lösungsviskosität beträgt 1, 247.

Jeweils 2 g des erhaltenen Polycarbonats werden in 20 ml Methylenchlorid gelöst, die Lösungen jeweils in einen 100 ml Rundkolben gegeben und das Lösungsmittel bei 30 - 40°C im Wasserstrahlvakuum am Rotationsverdampfer abgezogen.

Man erhält auf diese Weise Polycarbonatfilme auf der Innenseite der Kolben. Die Kolben werden nun jeweils eihe bestimmte Zeit in Salzbäder mit unterschiedlicher Temperatur getaucht und auf diese We ise der Molekulargewichtsaufbau bei den angewendeten Temperaturen bestimmt.

η rel (Ausgangsprobe) = 1,247

Temperung: 5 -Minuten bei 290 °C η rel (nach Temperung) = 1,360

5 Minuten bei 300 °C η rel (nach Temperung) = 1,320

5 Minuten bei 310 °C η rel (nach Temperung) = 1,346

10 Minuten bei 290 °C η rel (nach Temperung) = 1,367

15 Minuten bei 290°C η rel (nach Temperung) = 1,363.

**Beispiel 4**

Herstellung eines Kettenabbrechers: 22,8 g 2, 2-Bis- (4-hydroxyphenyl) -propan (Bisphenol A) (0, 1 Mol) und 13, 0 g Sorbinsäurechlorid (0, 1 Mol) werden in 250 ml trockenes Toluol gegeben und in einem Stickstoffstrom auf 90° C so lange erhitzt, bis kein HCl mehr entsteht (ca. 2,5 Std.). Die leicht gelb gefärbte Lösung wird eingeengt und man erhält 31 g eines bräunlich zähen öls.

Herstellung des Polycarbonats unter Verwendung dieses Kettenabbrechers:

Aus 45, 7 g 2, 2-Bis- (4-hydroxyphenyl) -propan (Bisphenol A) (0, 2 Mol), 16 g Natriumhydroxid (0,4 Mol) und 680 ml destilliertes Wasser wird eine

Lösung hergestellt. Nach Zugabe von 3, 87 g des oben hergestellten Kettenabbrechers gelöst in 370 ml Methylenchlorid werden bei 20° C- 25° C unter Rühren 32 g (0,32 Mol) Phosgen eingeleitet. Der pH-Wert wird während der Phosgenierung durch Zugabe von 20 ml 45 %iger wäßriger Natriumhydroxidlösung auf pH 12 gehalten. Nach beendeter Phosgenierung wird der pH-Wert durch Zugabe von weiteren 20 ml 45%iger wäßriger Natriumhydroxidlösung auf pH 13-14 angehoben, 4 ml 4 %ige wäßrige Triethylaminlösung zugefügt und weitere 45 Minuten gerührt. Die obere wäßrige Phase wird abgetrennt, die organische Phase angesäuert und elektrolytfrei gewaschen.

Die Methylenchloridlösung wird eingeengt und das Produkt bei 80 ° C 12 h im Vakuumtrockenschrank getrocknet.

Die relative Lösungsviskosität beträgt 1,297.

2 h des erhaltenen Polycarbonats werden in 20 ml Methylenchlorid gelöst, die Lösungen in einen 100 ml Rundkolben gegeben und das Lösungsmittel bei 30-40° C im Wasserstrahlvakuum am Rotationsverdampfer abgezogen.

Der Kolben wird 10 Minuten in ein 300° C heißes Salzbad getaucht. Die relative Lösungsviskosität des so behandelten erfindungsgemäßen Polycarbonats beträgt 1,554.

**Patentansprüche:**

1. Verfahren Zur Herstellung von aromatischen Polycarbonaten mit konjugierte Doppelbindungen enthaltenden Endgruppen und mit mittleren Molekulargewichten Mw (Gewichtsmittel) zwischen 5 000 und 100 000, gegebenenfalls im Gemisch mit bekannten aromatischen Polycarbonaten mit Mw zwischen 5 000 und 100 000, aus Diphenolen, Phosgen, 1 bis 20 Mol-%, bezogen auf Mole Diphenole, Kettenabbrechern und gegebenenfalls Verzweigern nach den bekannten Polycarbonatherstellungsmethoden des Phasengrenzflächenverfahrens oder des Verfahrens in homogener Lösung, dadurch gekennzeichnet, daß man Kettenabbrecher der Formel (I)

$X\text{-}A\text{-}(CH_2)_n\text{-}CH=CH\text{-}CH=CH\text{-}R$ (I),

gegebenenfalls in Kombination mit maximal gleichen Molmengen an anderen, bekannten Kettenabbrechern verwendet, wobei

R ein aromatischer Rest mit 6 bis 20°C-Atomen oder ein $C_1$-$C_8$-Alkyl

'n" O oder eine ganze Zahl zwischen 1 und 7,

X-A- entweder X-

oder 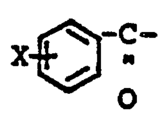

oder 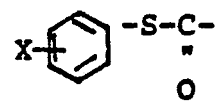

und

X- eine funktionelle Gruppe ist, die bei der Polycarbonatherstellung nach dem Zweiphasengrenzflächenverfahren oder nach dem Verfahren in homogener Phase als reaktiver Teil des Kettenabbrechers der Formel (I) fungiert.

2. Verfahren gemäß Anspruch 1, dadurch gekennzeichnet, daß X

$Cl\text{-}\overset{O}{\overset{\|}{C}}\text{-}$, $Br\text{-}\overset{O}{\overset{\|}{C}}\text{-}$, $Cl\text{-}\underset{O}{\underset{\|}{\overset{O}{\overset{\|}{S}}}}\text{-}$, $HO\text{-}\overset{O}{\overset{\|}{C}}\text{-}$, $Cl\text{-}\overset{O}{\overset{\|}{C}}\text{-}$

$HO\text{-}$, $\underset{R_1}{HN}\text{-}$, $H\text{-}\underset{R_1}{N}\text{-}\underset{O}{\underset{\|}{\overset{O}{\overset{\|}{S}}}}\text{-}$

oder H-O-Z-O-K- ist,

wobei $R_1$ eih aromatischer Rest oder ein aliphatischer Rest mit 1 bis 6 C-Atomen, -0-Z-0- ein Diphenolat rest und -K-

$\text{-}\overset{O}{\overset{\|}{C}}\text{-}$, $\text{-}\underset{O}{\underset{\|}{\overset{O}{\overset{\|}{S}}}}\text{-}$

oder

$\text{-}\overset{O}{\overset{\|}{C}}\text{-}O\text{-}$

sind.

3. Aromatische Polycarbonate mit konjugierte Doppelbindungen enthaltenden Endgruppen der Formel (Ia)

$\text{-}A\text{-}(CH_2)_n\text{-}CH=CH\text{-}CH=CH\text{-}R$ (Ia),

worin R, 'n" und -A- die für Formel (I) genannte Bedeutung haben, erhältlich gemäß Verfahren der Ansprüche 1 und 2, gegebenenfalls im Gemisch mit bekannten aromatischen Polycarbonaten mit Mw zwischen 5 000 und 100 000, die aus dem Kettenabbruch mit den anderen, bekannten Kettenabbrechern resultieren.

4. Polycarbonate mit mittleren Molekulargewichten Mw (Gewichtsmittel ermittelt durch Lichtstreuung) zwischen 5 000 und 100 000 der Formel (II)

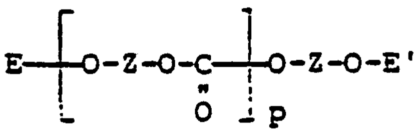 (II)

worin -0-Z-0- ein Diphenolatrest ist,

E und E' gleich oder verschieden sind und wobei mindestens einer der Reste E oder E' einem Rest der Formel (Ib)

$-Y-A-(CH_2)_n-CH=CH-CH=CH-R$ (Ib)

entspricht, worih R, 'n" und -A- die für Formel (I) genannte Bedeutung haben und -Y- das Bindeglied ist, das aus der Reaktion der Kettenabbrecher der Formel (I), gegebenenfalls unter Einbeziehung von Phosgen, resultiert, und wobei die übrigen Endgruppen E und E' aus der Reaktion mit den anderen, bekannten Kettenabbrechern, gegebenenfalls unter Einbeziehung von Phosgen, resultieren und wobei"p" der Polymerisationsgrad ist, der aus den Molekulargewichten Mw von 5 000 bis 100 000 resultiert.

5. Polycarbonate gemäß Anspruch 4, dadurch gekennzeichnet, daß -Y-

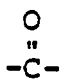 , 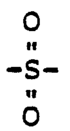 , 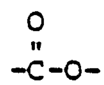 , 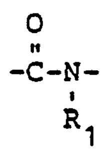

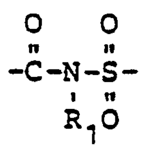

oder

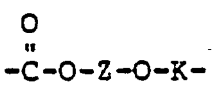

ist, wobei $R_1$ ein aromatischer Rest oder ein aliphatischer Rest mit 1 bis 6 C-Atomen,

-0-Z-0- ein Diphenolatrest und -K-

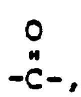, 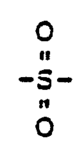

oder

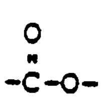

sind.

6. Verfahren gemäß Ansprüche 1 und 2, dadurch gekennzeichnet, daß man unter den Polycarbonatherstellungsbedingungen cokondensierbare bifunktionelle Oligomere oder Polymere mit Molekulargewichten Mw (Zahlenmittel) zwischen 500 und 5000 in Mengen von 0 bis 450 Gew.-%, bezogen auf die Gewichtsmenge an eingesetzten monomeren Diphenolen, mitverwendet.

7. Polycarbonate und Polycarbonatgemische, erhältlich gemäß Anspruch 6.

8. Gemische bestehend aus 5 bis 95 Gew.-% an Polycarbonat der Formel (II) gemäß Ansprüche 4 und 5 und 95 bis 5 Gew.-% an bekannten aromatischen, thermoplastischen Polycarbonaten mit Mw (Gewichtsmittelmolekulargewicht) von 10 000 bis 200 000.

## Claims

1. Process for the production of aromatic polycarbonates having terminal groups containing conjugated double bonds and having average molecular weights Mw (weight average) between 5,000 and 100,000, optionally in admixture with known aromatic polycarbonates having Mw between 5,000 and 100,000, from diphenols, phosgene, 1 to 20 mol %, based on the mols of diphenols, of chain stoppers and optionally branching agents, by the known polycarbonate production methods, namely the phase boundary process or the process in homogeneous solution, characterised in that chain stoppers of the formula (I)

$X-A-(CH_2)_n-CE=CH-CR=CE-R$ (I),

are used, optionally in combination with at most equal molar amounts of other, known chain stoppers, wherein

R is an aromatic radical with 6 to 20 C atoms or a $C_1$-$C_8$-alkyl,

'n" is 0 or an integer between 1 and 7,

X-A- is either X- or

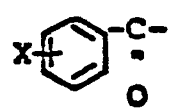 or 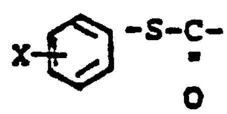

and

X- is a functional group which, in the production of polycarbonates by the two phase boundary process or by the process in the homogeneous phase, acts as the reactive part of the chain stopper of the formula (I).

2. Process according to Claim 1, characterised in that

X is

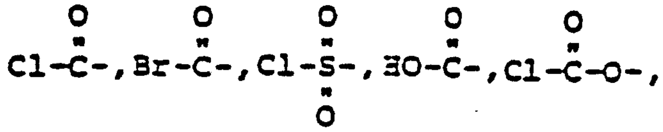

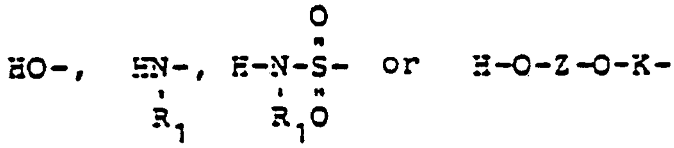

or

wherein

$R_1$ is an aromatic radical or an aliphatic radical with 1 to 6 C atoms,

-0-Z-0- is a diphenolate radical and

-K- is

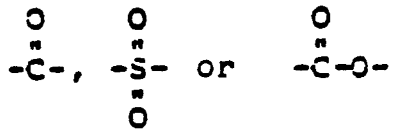

or .

3. Aromatic polycarbonates having terminal groups containing conjugated double bonds of the formula (Ia)

$-A-(CH_2)_n-CH=CH-CH=CH-R$ (Ia),

wherein

R, 'n" and -A- have the meaning given for formula (I), obtainable according to processes of Claims 1 and 2, optionally in admixture with known aromatic polycarbonates having Mw between 5,000 and 100,000, which result from chain termination using the other known chain stoppers.

4. Polycarbonates having average molecular weights Mw (weight average determined by light-scattering) between 5,000 and 100,000 of the formula (II)

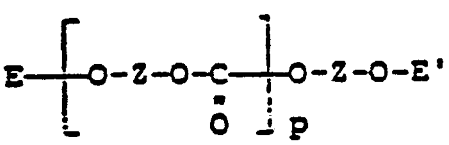

(II)

wherein

-0-Z-0- is a diphenolate radical,

E and E' are identical or different and wherein at least one of the radicals E or E' corresponds to

a radical of the formula (Ib)

$-Y-A-(CH_2)_n-CR=CE-CE=CE-R$ (Ib)

wherein

R, 'n" and -A- have the meaning given for formula (I) and -Y- is the binding link which results from the reaction of the chain stoppers of the formula (I), optionally including the use of phosgene,

and wherein

the other terminal groups E and E' result from the reaction with the other known chain stoppers, optionally including

and wherein

'p" is the degree of polymerisation which results from the molecular weights Mw of 5,000 to 100,000.

5. Polycarbonates according to Claim 4, characterised in that -Y- is

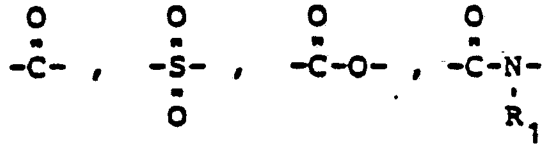

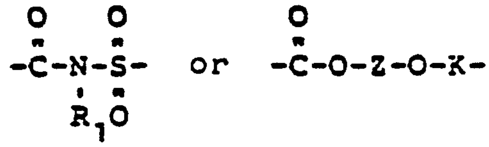

or

wherein

$R_1$ is an aromatic radical or an aliphatic radical with 1 to 6 C atoms,

-0-Z-0- is a diphenolate radical and

-K- is 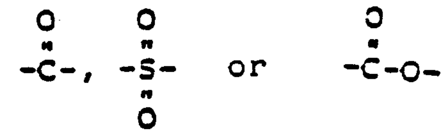 or .

6. Process according to Claims 1 and 2, characterised in that bifunctional oligomers or polymers having molecular weights Mw (number average) between 500 and 5,000 which are co-condensable under the polycarbonate production conditions are also used in amounts of 0 to 450% by weight, based on the amount by weight of monomeric diphenols used.

7. Polycarbonates and polycarbonate mixtures, obtainable according to Claim 6.

8. Mixtures consisting of 5 to 95% by weight of polycarbonate of the formula (II) according to Claims 4 and 5 and 95 to 5% by weight of known aromatic, thermoplastic polycarbonates having Mw (weight average molecular weight) of 10,000 to 200,000.

## Revendications

1. Procédé de production de polycarbonates aromatiques porteurs de groupes terminaux contenant des doubles liaisons conjuguées et ayant des poids moléculaires moyens $M_p$ (moyenne en poids) compris entre 5000 et 100 000, éventuellement en mélange avec des polycarbonates aromatiques connus de valeur M comprise entre 5000 et 100 000, à partir de diphénols, de phosgène, de 1 à 20 moles %, par rapport aux moles de diphénols, d'agents de terminaison de chaîne et, le cas échéant, d'agents de ramification, par les modes opératoires connus de production de polycarbonates du procédé à l'interface entre phases ou du procédé en solution homogène, caractérisé en ce qu'on

utilise des agents de terminaison de chaîne de formule (I)

X-A- $(CH_2)_n$-CH=CH-CH=CH-R (I)

éventuellement en association avec des quantités molaires au maximum égales d'autres agents connus de terminaison de chaîne,

formule dans laquelle

R représente un reste aromatique ayant 6 à 20 atomes de carbone ou un reste alkyle en $C_1$ à $C_8$, 'n" est égal à 0 ou à un nombre entier de 1 à 7, X-A- represente X- ou un groupe

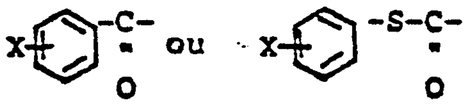

et

X- est un groupe fonctionnel qui fonctionne, dans la production de polycarbonates selon le procédé à l'interface entre deux phases ou selon le procédé en phase homogène, comme partie réactive de l'agent de terminaison de chaîne de formule (I)

2. Procede suivant la revendication 1, caractérisé en ce que X représente

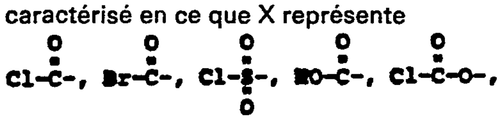

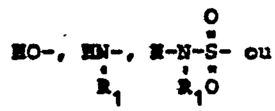

H-O-Z-O-K

où $R^1$ est un reste aromatique ou un reste aliphatique ayant-1 à 6 atomes de carbone, -O-Z-O- est un reste diphénolate et -K- est un reste

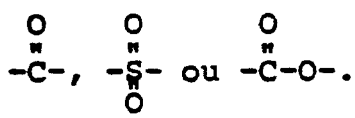

3. Polycarbonates aromatiques porteurs de groupes terminaux contenant des doubles liaisons conjuguées de formule (Ia)

-A-$(CH_2)_n$-CH=CH-CH=CH-R (Ia)

dans laquelle R, 'n" et -A- ont la définition mentionnée pour la formule (I), pouvant être obtenus par le procédé suivant les revendications 1 et 2, éventuellement en mélange avec des polycarbonates aromatiques connus de valeur $\overline{M}_p$ comprise entre 5000 et 100 000, qui résultent de la terminaison de chaîne avec d'autres agents connus de terminaison de chaîne.

4. Polycarbonates de poids moleculaires moyens $\overline{M}_p$ (moyennes en poids déterminées par diffusion de la lumière) compris entre 5000 et 100 000, de formule (II)

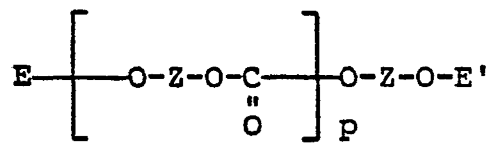 (II)

dans laquelle -O-Z-O- est un reste diphenolate, E et E' sont égaux ou differents et au moins l'un des restes E ou E' correspond à un reste de formule (Ib)

-Y-A- $(CH_2)_n$-CH=CH-CH=CH-R (Ib)

où R, 'n" et -A- ont la définition mentionnée pour la formule (I) et -Y- est le membre de liaison qui résulte de la réaction des agents de terminaison de chaîne de formule (I), éventuellement en faisant intervenir le phosgène, les autres groupes terminaux E et E' résultant de la réaction avec les autres agents connus de terminaison de chaîne, éventuellement avec l'intervention de phosgène, et 'p" désigne le degré de polymérisation qui résulte des poids moléculaires $\overline{M}_p$ de 5000 à 100 000.

5. Polycarbonates suivant la revendication 4, caractérisés en ce que -Y- représente

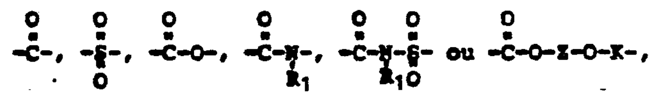

où $R_1$ est un reste aromatique ou un reste aliphatique ayant 1 à 6 atomes de carbone,

-O-Z-O- est un reste diphénolate et -K- est un reste

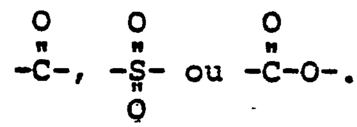

6. Procédé suivant les revendications 1 et 2, caractérisé en ce qu'on utilise en même temps des oligomères ou polymères bifonctionnels, co-condensables dans les conditions de production de polycarbonates, ayant des poids moléculaires $\overline{M}_p$ (moyennes en nombre) compris entre 500 et 5000, en quantités de 0 à 450 % en poids sur la base de la quantité en poids des diphénols monomériques utilisés.

7. Polycarbonates et mélanges de polycarbonates pouvant être obtenus conformément à la revendication 6.

8. Mélanges formés de 5 à 95% en poids d'un polycarbonate de formule (II) suivant les revendications 4 et 5 et de 95 à 5% en poids de polycarbonates thermoplastiques aromatiques connus de valeur $\overline{M}_p$ (moyenne en poids du poids moléculaire) de 10 000 à 200 000.